# FASCICULE DE BREVET EUROPEEN

(11) **EP 3 980 633 B1**
(45) Date de publication et mention de la délivrance du brevet: **31.12.2025**
(21) Numéro de dépôt: 20737526.2
(22) Date de dépôt: 29.05.2020
(51) Int. Cl.: F02C 7/36, F01D 25/18, F16H 57/04, F01D 15/12

(54) **REDUCTEUR PLANETAIRE POUR UNE TURBOMACHINE D'AERONEF**
PLANETENUNTERSETZUNGSGETRIEBE FÜR EIN FLUGZEUGTRIEBWERK
PLANETARY REDUCTION GEAR FOR AN AIRCRAFT TURBINE ENGINE

(30) Priorité: 06.06.2019 FR 1906010
(43) Date de publication de la demande: 13.04.2022
(73) Titulaire: SAFRAN AIRCRAFT ENGINES, 75015 Paris (FR)
(72) Inventeur: JACQUEMARD, Christophe, Paul, 77550 Moissy-Cramayel (FR); DESOMBRE, Didier, Gabriel, Bertrand, 77550 Moissy-Cramayel (FR)
(74) Mandataire: Gevers & Orès
(86) Numéro de dépôt international: PCT/FR2020/050926
(87) Numéro de publication internationale: WO 2020/245529

(56) Documents cités:
- EP-A1- 3 054 139
- EP-A1- 3 473 893
- WO-A1-2015/026899
- FR-A1- 3 052 522

## Description

### Domaine technique de l'invention

La présente invention se rapporte au domaine des turbomachines d'aéronef, en particulier aux turbomachines à double flux comprenant un réducteur planétaire. Elle vise plus particulièrement les dispositifs de récupération et de canalisation de l'huile nécessaire à la lubrification du réducteur.

### Arrière-plan technique

L'état de l'art comprend notamment les documents EP3473893, WO-A1-2010/092263, FR-A1-2 987 416 et FR-A1-3 041 054.

Le rôle d'un réducteur mécanique est de modifier le rapport de vitesse et de couple entre l'axe d'entrée et l'axe de sortie d'un mécanisme.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution Y différent, ils sont équirépartis sur le même diamètre de fonctionnement autour de l'axe des planétaires. Ces axes Y sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- sur un réducteur planétaire, le porte-satellites est fixe et la couronne constitue l'arbre de sortie du dispositif qui tourne dans le sens inverse du solaire.
- sur un réducteur épicycloïdal, la couronne est fixe et le porte-satellites constitue l'arbre de sortie du dispositif qui tourne dans le même sens que le solaire.
- sur un réducteur différentiel, aucun élément n'est fixé en rotation. La couronne tourne dans le sens contraire du solaire et du porte-satellites.

Les réducteurs peuvent comprendre un ou plusieurs étages d'engrènement. Cet engrènement est assuré de différentes façons comme par contact, par friction ou encore par champs magnétique. Il existe plusieurs types d'engrènement par contact comme avec des dentures droites ou en chevron.

Un réducteur doit être lubrifié et l'apport d'huile de lubrification aux composants tournants d'un réducteur peut être problématique. L'huile est en général amenée au réducteur par un distributeur d'huile de lubrification.

Dans le cas d'un réducteur planétaire, l'huile circulant dans le réducteur pour lubrifier les éléments roulants et les dentures est évacuée en périphérie par centrifugation, à travers la couronne qui peut tourner jusqu'à environ 3000 tours/minute.

On a déjà proposé de disposer une gouttière de récupération et de canalisation d'huile autour de la couronne du réducteur, au droit des sorties d'huile de la couronne. Cependant, l'huile projetée dans la gouttière a tendance à rebondir et à être renvoyée vers le réducteur. De plus, des phénomènes d'aération et de moussage de l'huile peuvent survenir du fait de la projection de l'huile à grande vitesse sur les parois de la gouttière.

L'huile doit donc être récupérée et canalisée le plus efficacement possible à l'extérieur de la couronne, afin :
- d'être refroidie puis réinjectée dans le circuit de lubrification du réducteur ;
- de minimiser les projections d'huile chaude sortant du réducteur et ainsi de limiter :
   ∘ les échanges thermiques entre l'huile et le carter portant le réducteur,
   ∘ la rétention d'huile dans l'enceinte du réducteur et donc la taille du réservoir ;
- de limiter la consommation d'huile via le circuit de dégazage de l'enceinte contenant le réducteur.

L'invention a pour but de répondre à ces objectifs d'une manière simple et peu coûteuse.

### Résumé de l'invention

L'invention concerne un réducteur à train épicycloïdal pour une turbomachine d'aéronef selon la revendication 1.

Dans un réducteur planétaire, l'huile de lubrification traverse radialement la couronne et est projetée radialement vers l'extérieur par centrifugation. L'invention propose de récupérer et canaliser cette huile au moyen d'une gouttière qui n'est pas destinée à récupérer directement l'huile projetée. En effet, la gouttière est déportée axialement par rapport aux sorties d'huile de la couronne et reçoit l'huile projetée par l'intermédiaire d'un déflecteur annulaire. Le déflecteur capte l'huile et la réachemine vers une chambre de la gouttière.

L'invention permet ainsi d'augmenter la capacité volumique de la gouttière, qui n'est pas limitée par l'espace radial disponible au droit des sorties d'huile de la couronne. De plus, les risques de projection d'huile sont limitées grâce au déflecteur qui achemine l'huile jusqu'à la chambre de la gouttière.

L'utilisation d'un déflecteur présente plusieurs avantages. Ce déflecteur peut être conformé pour limiter les projections d'huile sur ses parois. La zone d'impact de l'huile sur le déflecteur est avantageusement située une distance prédéterminée du réducteur, permettant de fournir au film d'huile une énergie supplémentaire, compte tenu d'une position radiale et d'une vitesse périphérique légèrement supérieure à celles des sorties d'huile de la couronne. L'intégration du déflecteur au droit des sorties d'huile de la couronne vient en lieu et place de la gouttière de la technique antérieure, et donc n'a pas d'impact sur l'encombrement dans l'enceinte dans laquelle est monté et lubrifié le réducteur. Le déflecteur contribue ensuite à diriger l'huile dans la chambre de la gouttière qui peut être localisé à l'amont ou à l'aval. Pour ce faire, il est possible d'envisager différentes formes et géométries en sortie du déflecteur (forme tronconique par exemple) pour faciliter l'écoulement vers la chambre.

Le réducteur selon l'invention peut comprendre une ou plusieurs des caractéristiques suivantes, prises isolément les unes des autres, ou en combinaison les unes avec les autres :
- la chambre annulaire définit une première cuvette semi-circulaire supérieure à section axiale en U, qui s'étend sensiblement de 9h à 12h et de 12h à 3h par analogie avec le cadran d'une horloge, et une seconde cuvette semi-circulaire inférieure à section axiale en U, qui s'étend sensiblement de 9h à 6h et de 6h à 3h par analogie avec le cadran d'une horloge,
- ladite première cuvette comprend un fond défini par une paroi cylindrique interne de la chambre, et ladite seconde cuvette comprend un fond défini par une paroi cylindrique externe de la chambre,
- la paroi cylindrique externe comprend une ouverture radiale d'évacuation d'huile,
- les parois cylindriques interne et externe ont des axes qui ne sont pas alignés entre eux et/ou qui ne sont pas alignés sur un axe longitudinal du réducteur,
- la première cuvette est reliée à une paroi annulaire radialement interne faisant partie de ladite conduite, et la seconde cuvette est reliée à une paroi annulaire radialement externe faisant partie de ladite conduite,
- une cloison annulaire perforée est logée dans ladite chambre et est configurée pour désaérer l'huile,
- la cloison comprend un premier secteur s'étendant dans la première cuvette, sensiblement au niveau de ladite paroi annulaire radialement interne, et un second secteur s'étendant dans la seconde cuvette, sensiblement au niveau de ladite paroi annulaire radialement externe.

L'invention concerne également une turbomachine d'aéronef, comportant un réducteur à train planétaire comprenant un capot externe de récupération d'huile mobile en rotation et entouré par au moins une gouttière telle que décrite dans ce qui suit.

### Brève description des figures

La présente invention sera mieux comprise et d'autres détails, caractéristiques et avantages de la présente invention apparaîtront plus clairement à la lecture de la description qui suit, en référence aux dessins annexés sur lesquels :
[Fig.1] La figure 1 représente une vue schématique en coupe axiale d'un réducteur planétaire de turbomachine.
[Fig.2] La figure 2 est une vue schématique partielle en coupe axiale et en perspective d'une gouttière d'un réducteur selon la technique antérieure,
[Fig.3] La figure 3 représente une vue schématique partielle en coupe axiale et en perspective d'un réducteur selon l'invention, le plan de coupe étant situé à 12h par analogie avec le cadran d'une horloge,
[Fig.4] La figure 4 représente une autre vue schématique partielle en coupe axiale et en perspective du réducteur de la figure 3, le plan de coupe étant situé à 6h par analogie avec le cadran d'une horloge,
[Fig.5] La figure 5 est une vue schématique en perspective de la gouttière du réducteur des figures 3 et 4,
[Fig.6] La figure 6 est une autre vue schématique en perspective de la gouttière du réducteur des figures 3 et 4, t
[Fig.7] La figure 7 est une autre vue schématique partielle et en perspective de la gouttière du réducteur des figures 3 et 4.

### Description détaillée de l'invention

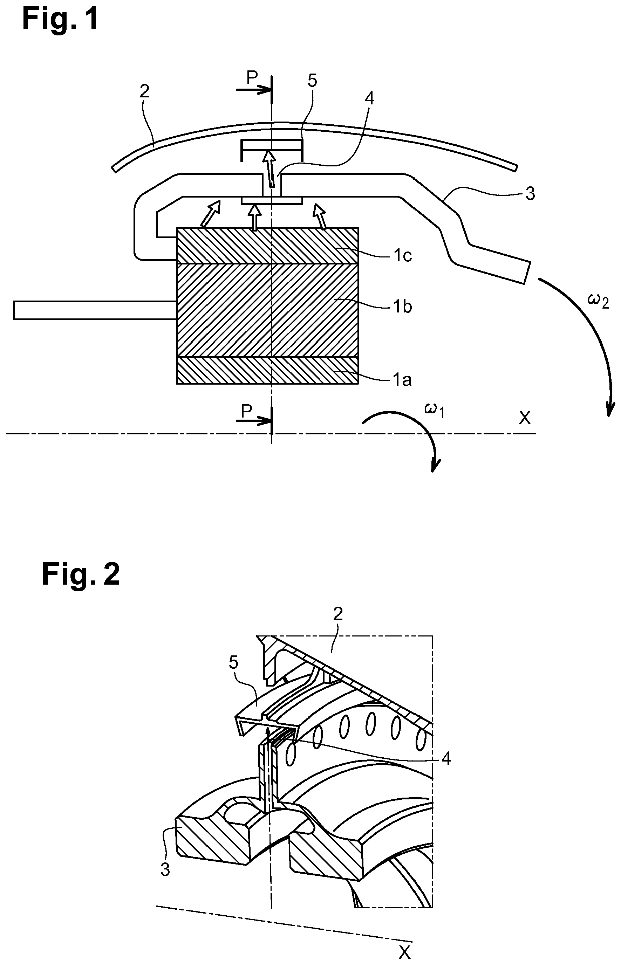

La figure 1 représente très schématiquement un réducteur planétaire de turbomachine, avec un train d'engrenages épicycloïdal 1a-1b-1c, qui est monté dans une enceinte 2.

La référence X désigne un axe longitudinal de la turbomachine, qui est l'axe de rotation de ses rotors et du réducteur.

La partie la plus interne 1a par rapport à l'axe X représente un solaire sous la forme d'un pignon moteur, qui est monté par une liaison par cannelures sur un arbre de turbine, non représenté, et qui tourne à une vitesse déterminée ω1.

La partie 1b représente un porte-satellites supportant, par exemple, trois satellites qui s'engrènent autour du solaire 1a. Ici, le porte-satellites est fixé aux parties statiques de la turbomachine. La partie externe 1c représente une couronne externe qui s'engrène dans les satellites.

Les rapports de dimensions entre les différents éléments sont agencés, ici, pour que la couronne externe tourne à une vitesse ω2, réduite par rapport à celle du solaire 1a, les satellites tournant par rapport au porte-satellites.

Cette description succincte illustre le fait que, dans un tel dispositif, de nombreuses pièces sont en contact avec des mouvements relatifs et des efforts importants, ce qui nécessite une forte quantité d'huile pour la lubrification et le refroidissement.

Une arrivée d'huile, non représentée sur la figure, apporte de l'huile au réducteur pour le lubrifier. Cette huile traverse par entraînement centrifuge diverses parties actives du réducteur, telles que des dentures, et elle est entraînée radialement vers l'extérieur par centrifugation.

La couronne 3 est conformée pour récupérer l'huile ayant lubrifié le réducteur, dont le parcours est représenté par des flèches, et la guider vers des orifices 4 de sortie. Ces orifices 4 sont avantageusement localisés dans une zone de rayon maximal de la couronne 3 pour favoriser l'évacuation de l'huile par centrifugation. De plus, ils sont en général plusieurs et, de préférence, uniformément répartis en circonférence dans un plan P perpendiculaire à l'axe de rotation X.

Une gouttière annulaire 5 entoure le réducteur dans le plan P et est configurée pour récupérer l'huile éjectée de la couronne 3 par centrifugation. Cette gouttière 5 est fixée à l'enceinte 2 et s'étend donc au droit des orifices 4, ce qui entraîne des inconvénients décrits plus haut.

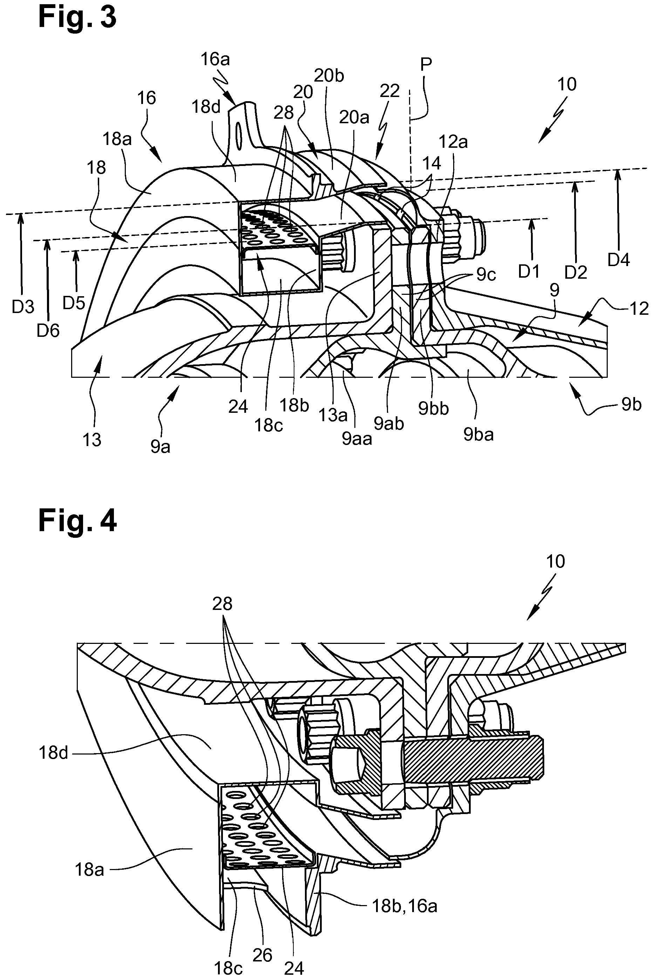

Les figures 3 et 4 illustrent un mode de réalisation d'un réducteur 10 selon l'invention.

Comme évoqué dans ce qui précède, le réducteur 10 comprend un solaire, des satellites portés par un porte-satellites, et une couronne 9, seule la couronne étant partiellement visible dans les dessins.

Le réducteur 10 est du type planétaire donc le solaire et la couronne 9 sont mobiles en rotation alors que le porte-satellites est fixe.

La couronne 9 est séparée en deux demi-couronnes:
▪ une demi-couronne amont 9a constituée d'une jante 9aa et d'une demi-bride de fixation 9ab. Sur la jante 9aa se trouve l'hélice amont de la denture du réducteur. Cette hélice amont engrène avec celles des satellites qui engrènent avec celle du solaire ;
▪ une demi-couronne aval 9b constituée d'une jante 9ba et d'une demi-bride de fixation 9bb. Sur la jante 9ba se trouve l'hélice aval de la denture du réducteur. Cette hélice aval engrène avec celles des satellites qui engrènent avec celle du solaire.

La demi-bride de fixation 9ab de la couronne amont 9a et la demi-bride de fixation 9bb de la couronne aval 9b forment la bride de fixation 9c de la couronne.

La couronne 9 est fixée à un porte-couronne annulaire 12 en assemblant la bride de fixation 9c de la couronne et la bride de fixation 12a du porte-couronne 12 à l'aide d'un montage boulonné par exemple. Le porte-couronne 12 s'étend autour de la demi-couronne 9b et sa bride de fixation 12a est appliquée sur la face aval de la demi-bride 9bb.

La couronne 9 est en outre fixée à un arbre de soufflante 13 à l'aide du même montage boulonné. L'arbre 13 s'étend autour de la demi-couronne 9a et comprend une bride de fixation 13a appliquée sur la face amont de la demi-bride 9ab.

Comme évoqué dans ce qui précède et illustrant l'art antérieur, la couronne 9 comprend des orifices de sortie d'huile à sa périphérie externe. Ces orifices sont formés par des lunules radiales 14 formées dans les faces en regard des brides 9ab, 9bb, c'est-à-dire dans le plan P qui représente ici le plan d'appui de ces brides.

Le réducteur 10 comporte une gouttière annulaire 16 de récupération et de canalisation de l'huile de lubrification du réducteur 10, qui est montée autour du réducteur 10 et en particulier autour de sa couronne 9.

Selon l'invention, cette gouttière 16 est décalée par rapport au plan P qui passe sensiblement par le milieu de la couronne 9, en direction axiale. Dans l'exemple représenté, elle est située à l'amont de ce plan P et comprend deux parties annulaires à savoir une chambre annulaire 18 et une conduite annulaire 20.

Le réducteur 10 comprend en outre un déflecteur annulaire 22 qui est ici fixé à la couronne 9. Le déflecteur 22 est ici relié au porte-couronne 12. Plus exactement, le porte-couronne 12 est formé d'une seule pièce avec le déflecteur 22 qui s'étend radialement vers l'extérieur depuis la bride 12a.

Le déflecteur 22 s'étend autour des lunules 14 et a en section axiale une forme incurvée dont la concavité est orientée vers l'amont et radialement vers l'intérieur.

Dans l'exemple représenté, les brides 13a, 12a et demi-brides 9ab, 9bb ont un diamètre externe D1 et le déflecteur 22 s'étend entre le diamètre D1, minimal, et le diamètre maximal D2. Le déflecteur 22 s'étend par ailleurs axialement depuis son extrémité axiale aval située en aval du plan P, au niveau de la demi-bride 9bb ou de la bride 12a, jusqu'à son extrémité amont située en amont du plan P, au niveau de la demi-bride 9ab ou de la bride 13a. L'extrémité amont du déflecteur 22 s'étend donc autour et à distance radiale de la bride 13a.

La conduite 20 a une forme annulaire et comprend deux parois annulaires coaxiales, respectivement interne 20a et externe 20b. La conduite 20 et ses parois 20a, 20b sont centrées sur l'axe X de la turbomachine et du réducteur 10.

Les parois 20a, 20b ont chacune une forme générale tronconique. La paroi externe 20b comprend une extrémité amont de plus petit diamètre D3 et une extrémité aval de plus grand diamètre D4. D4 est supérieur à D2 et l'extrémité aval de la paroi 20b s'étend autour de l'extrémité amont du déflecteur 22. La paroi interne 20a comprend une extrémité amont de plus petit diamètre D5 et une extrémité aval de plus grand diamètre D6. D6 est supérieur à D1 et l'extrémité aval de la paroi 20a s'étend autour de la bride 13a et à l'intérieur de l'extrémité amont du déflecteur 22.

La gouttière 16 est fixe alors que le déflecteur 22 est mobile en rotation avec la couronne 9. Des jeux radiaux suffisants sont donc prévus entre la bride 13a et la paroi 20a, d'une part, et entre le déflecteur 22 et la paroi 20b, d'autre part, pour autoriser la rotation de l'un par rapport à l'autre.

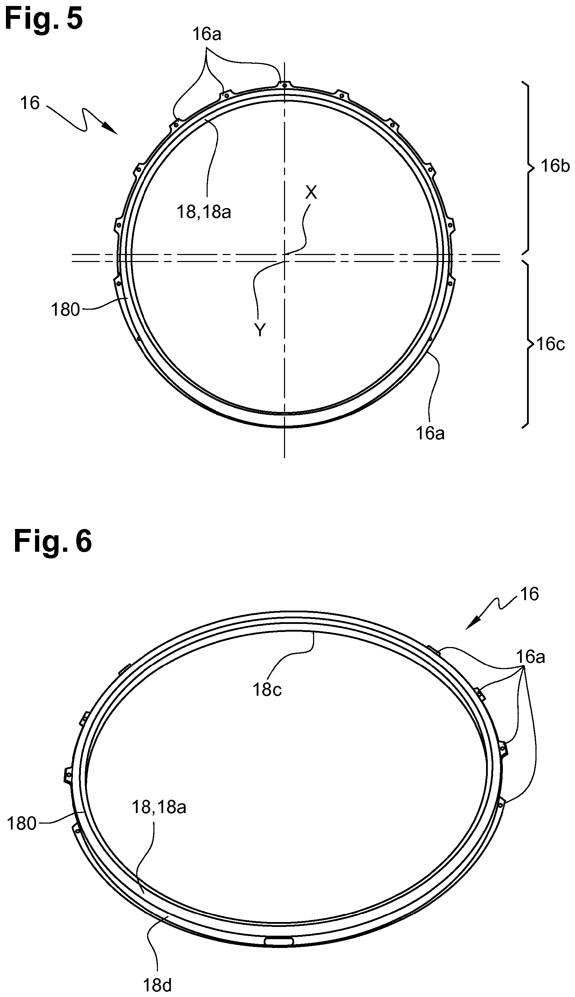

La gouttière 16 est fixée à un stator de la turbomachine, telle que l'enceinte 2 précitée, par l'intermédiaire d'une bride radiale 16a. Comme cela est visible aux figures 5 et 6, la gouttière 16 peut être considérée comme comportant deux secteurs, respectivement supérieur 16b et inférieur 16c. Le secteur supérieur 16b a une étendue angulaire de 180° environ et s'étend de 9h à 12h et de 12h à 3h par analogie avec le cadran d'une horloge. Le secteur inférieur 16c a également une étendue angulaire de 180° environ et s'étend de 9h à 6h et de 6h à 3h par analogie avec le cadran d'une horloge.

Au niveau du secteur supérieur 16b, la bride 16a se présente sous la forme d'une série de pattes radiales régulièrement espacées et percées chacune d'un orifice de passage d'une vis ou analogue. Au niveau du secteur inférieur, la bride 16a se présente sous la forme d'un rebord radial continu sur 360° et qui comprend par endroit, et en particulier aux extrémités circonférentielles de ce rebord, des orifices de passage de vis.

La chambre 18 a une forme annulaire et a en section axiale une forme générale parallélépipédique. Elle comprend deux parois latérales orientées radialement, respectivement amont 18a et aval 18b, et reliées entre elles par des parois cylindriques, respectivement interne 18c et externe 18d. La chambre 18 délimite un espace annulaire interne qui est divisé en deux parties, respectivement interne et externe, par une cloison annulaire 24 perforée.

La paroi latérale amont 18a est continue sur 360°. Comme on le voit aux figures 5 et 6, son axe de révolution Y n'est pas aligné sur l'axe X mais est décalé vers le bas (ou vers 6h). Ceci se traduit par un décalage vers le bas (ou vers 6h) de cette paroi amont 18a. Les figures 3 et 4 montrent par exemple que la périphérie interne de la paroi 18a est située proche de l'arbre 13 à 12h (figure 5) alors qu'elle est située proche de la périphérie externe de la bride 13a à 6h (figure 6).

La paroi latérale aval 18b est continue sur 360° et comprend une ouverture annulaire de communication fluidique avec l'extrémité amont de la conduite 20. La paroi 18b est ainsi reliée aux parois 20a, 20b de la conduite 20. Cette paroi 18b est en outre décalée, comme la paroi 18a, vis-à-vis de l'axe X (figures 3 et 4). La figure 4 permet de constater que la paroi 18b est confondue avec la bride 16a.

La paroi cylindrique interne 18c s'étend autour de l'arbre 13 et suit aussi le même décalage vis-à-vis de l'axe X (figures 3 et 4).

La ligne circulaire 180 visible à la figure 5 et à la figure 6 est représentative des décalages précités pour les parois cylindriques, respectivement interne 18c et externe 18d de la chambre 18.

La paroi cylindrique externe s'étend autour de l'arbre 13 et suit aussi le même décalage vis-à-vis de l'axe X (figures 3 et 4). Cette paroi externe 18d comprend une ouverture radiale 26 à 6h qui est configurée pour l'écoulement et l'évacuation de l'huile en vue de son recyclage.

La cloison 24 a en section une forme générale en U et comprend une partie médiane plane et perforée d'orifices 28 de passage d'huile, et deux rebords annulaires radiaux à ses extrémités axiales. Ces rebords sont orientés radialement vers l'intérieur et prennent appui à l'intérieur de la chambre 18, sur les faces en regard des parois latérales 18a, 18b. La cloison 24 est également décalée par rapport à l'axe X et se retrouve alignée avec l'extrémité amont 20a de la paroi interne sur la moitié supérieure de la gouttière, et alignée avec l'extrémité amont de la paroi externe 20b sur la moitié inférieure de la gouttière. La partie médiane plane et perforée d'orifices 28 de passage d'huile de la cloison 24 est sensiblement équidistante des parois cylindriques, respectivement interne 18c et externe 18d de la chambre 18.

Les orifices 28 de la cloison 24 sont calibrés. Cette cloison a pour fonction de ralentir la vitesse du fluide et donc d'éviter l'effet de moussage qui serait due à une trop grande vitesse de désaération de l'huile sortant du réducteur. L'huile ainsi collectée dans la chambre 18 est correctement désaérée, améliorant son écoulement et sa captation.

En fonctionnement, l'huile peut être récupérée de la façon suivante. De l'huile est projetée à travers les lunules 14 sur le déflecteur 22 et est immédiatement redirigée vers l'amont à l'intérieur de la conduite 20. L'huile passe d'un repère tournant à un repère fixe. A l'intérieur de la conduite 20, l'huile conserve une certaine vitesse et parvient dans la chambre 18. Dans le secteur supérieur 16c, la chambre 18 comprend ou forme une cuvette semi-annulaire qui a une forme en U dont l'ouverture est orientée radialement vers l'extérieur et fermée par la cloison 24. L'huile est reçue dans cette cuvette et s'écoule par gravité à travers la cloison 24 puis de manière circonférentielle jusqu'aux extrémités circonférentielles de la cuvette. Dans le secteur inférieur 16d, la chambre 18 comprend ou forme une cuvette semi-annulaire qui a une forme en U dont l'ouverture est orientée radialement vers l'intérieur et fermée par la cloison 24. L'huile est reçue dans cette cuvette et s'écoule par gravité à travers la cloison 24 puis de manière circonférentielle jusqu'au point le plus bas, à 6h, de la gouttière, où l'huile pourra passer à travers l'ouverture 26 en vue de son recyclage.

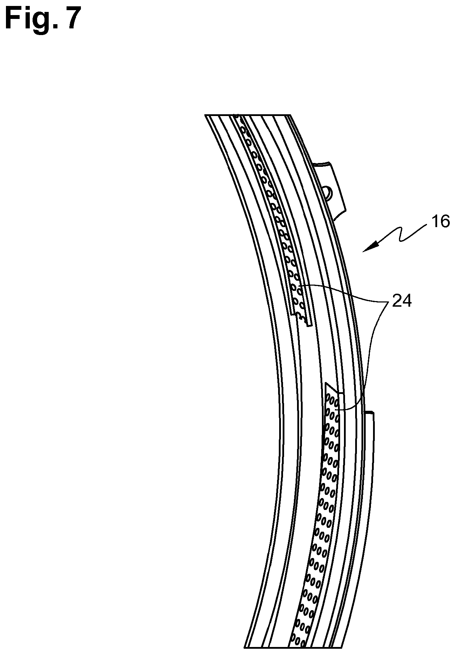

La cloison 24 peut s'étendre en continu sur 360. En variante, elle pourrait être sectorisée et comprendre au moins deux secteurs indépendants. Ces secteurs peuvent se recouvrir mutuellement à leurs extrémités circonférentielles. En variante, ces extrémités pourraient être distantes, comme illustré à la figure 7, de façon à faciliter la transition de la cloison entre les cuvettes précitées.

## Revendications

1. Réducteur planétaire (10) pour une turbomachine d'aéronef, ce réducteur comportant un solaire mobile en rotation, une couronne (9) mobile en rotation, et des satellites engrenés avec le solaire et la couronne et portés par un porte-satellites destiné à être fixé à un stator, ledit réducteur comportant en outre une gouttière annulaire de récupération et de canalisation d'huile de lubrification qui est montée autour de la couronne, ladite couronne (9) comprenant des brides de fixations (9ab, 9bb) et des orifices de sortie d'huile (4) formés par des lunules radiales (14) formées dans des faces en regard desdites brides de fixations (9ab, 9bb), lesdites faces en regard étant séparées par un plan médian (P) passant sensiblement par le milieu de la couronne, le réducteur comprenant en outre un déflecteur annulaire (22) fixé à la couronne et configuré pour acheminer de l'huile sortant radialement vers l'extérieur de la couronne via lesdits orifices de sortie d'huile jusqu'à la gouttière grâce aux forces centrifuges, la gouttière comportant :
- une chambre annulaire (18) qui est déportée axialement par rapport au plan médian (P), et
- une conduite annulaire (20) située sur un côté de ladite chambre et débouchant dans ladite chambre, cette conduite annulaire étant configurée pour recevoir l'huile acheminée par ledit déflecteur et assurer son écoulement jusqu'à la chambre.

2. Réducteur (10) selon la revendication 1, dans lequel la chambre annulaire (18) définit une première cuvette semi-circulaire supérieure à section axiale en U, qui s'étend sensiblement de 9h à 12h et de 12h à 3h par analogie avec le cadran d'une horloge, et une seconde cuvette semi-circulaire inférieure à section axiale en U, qui s'étend sensiblement de 9h à 6h et de 6h à 3h par analogie avec le cadran d'une horloge.

3. Réducteur (10) selon la revendication 2, dans lequel ladite première cuvette comprend un fond défini par une paroi cylindrique interne (18c) de la chambre (18), et ladite seconde cuvette comprend un fond défini par une paroi cylindrique externe (18d) de la chambre.

4. Réducteur (10) selon la revendication 3, dans lequel la paroi cylindrique externe (18d) comprend une ouverture radiale (26) d'évacuation d'huile.

5. Réducteur (10) selon la revendication 3 ou 4, dans lequel les parois cylindriques interne (18c) et externe (18d) ont des axes (Y) qui ne sont pas alignés entre eux et/ou qui ne sont pas alignés sur un axe longitudinal (X) du réducteur.

6. Réducteur (10) selon l'une des revendications 2 à 5, dans lequel la première cuvette est reliée à une paroi annulaire radialement interne (20a) faisant partie de ladite conduite (20), et la seconde cuvette est reliée à une paroi annulaire radialement externe (20b) faisant partie de ladite conduite.

7. Réducteur (10) selon l'une des revendications précédentes, dans lequel une cloison annulaire (24) perforée est logée dans ladite chambre (18) et est configurée pour désaérer l'huile.

8. Réducteur (10) selon la revendication 7, en dépendance de la revendication 6, dans lequel la cloison (24) comprend un premier secteur s'étendant dans la première cuvette, sensiblement au niveau de ladite paroi annulaire radialement interne (20a), et un second secteur s'étendant dans la seconde cuvette, sensiblement au niveau de ladite paroi annulaire radialement externe (20b).

9. Turbomachine d'aéronef, comportant un réducteur (10) selon l'une des revendications précédentes.

## Patentansprüche

1. Planetenuntersetzungsgetriebe (10) für ein Flugzeugturbotriebwerk, wobei dieses Untersetzungsgetriebe ein drehbewegliches Sonnenrad, einen drehbeweglichen Zahnkranz (9) und Planetenräder umfasst, die mit dem Sonnenrad und dem Zahnkranz in Eingriff stehen und von einem Planetenradträger getragen werden, der dazu bestimmt ist, an einem Stator befestigt zu werden, wobei das Untersetzungsgetriebe weiter eine ringförmige Rinne zum Auffangen und Kanalisieren von Schmieröl umfasst, die um den Zahnkranz herum angebracht ist, wobei der Zahnkranz (9) Befestigungsflansche (9ab, 9bb) und Ölauslassöffnungen (4) umfasst, die von radialen Aussparungen (14) gebildet werden, welche in den Befestigungsflanschen (9ab, 9bb) zugewandten Flächen gebildet sind, wobei die zugewandten Flächen durch eine Mittelebene (P), die im Wesentlichen durch die Mitte des Zahnkranzes verläuft, getrennt sind, wobei das Untersetzungsgetriebe weiter einen ringförmigen Deflektor (22) umfasst, der an dem Zahnkranz befestigt und so konfiguriert ist, dass er ÖI, das radial austritt, dank der Zentrifugalkräfte über die Ölauslassöffnungen zur Außenseite des Zahnkranzes bis zur Rinne ableitet, wobei die Rinne umfasst:
- eine ringförmige Kammer (18), die in Bezug auf die Mittelebene (P) axial versetzt ist, und
- eine ringförmige Leitung (20), die sich auf einer Seite der Kammer befindet und in die Kammer mündet, wobei diese ringförmige Leitung so konfiguriert ist, dass sie das von dem Deflektor abgeleitete ÖI aufnimmt und dessen Abfluss bis zur Kammer gewährleistet.

2. Untersetzungsgetriebe (10) nach Anspruch 1, wobei die ringförmige Kammer (18) eine erste obere halbkreisförmige Mulde mit U-förmigem axialem Querschnitt definiert, die sich, in Anlehnung an das Zifferblatt einer Uhr, im Wesentlichen von 9 Uhr bis 12 Uhr und von 12 Uhr bis 3 Uhr erstreckt, und eine zweite untere halbkreisförmige Mulde mit U-förmigem axialem Querschnitt, die sich, in Anlehnung an das Zifferblatt einer Uhr, im Wesentlichen von 9 Uhr bis 6 Uhr und von 6 Uhr bis 3 Uhr erstreckt.

3. Untersetzungsgetriebe (10) nach Anspruch 2, wobei die erste Mulde einen Boden umfasst, der durch eine innere zylindrische Wand (18c) der Kammer (18) definiert ist, und die zweite Mulde einen Boden umfasst, der durch eine äußere zylindrische Wand (18d) der Kammer definiert ist.

4. Untersetzungsgetriebe (10) nach Anspruch 3, wobei die äußere zylindrische Wand (18d) eine radiale Ölablassöffnung (26) umfasst.

5. Untersetzungsgetriebe (10) nach Anspruch 3 oder 4, wobei die innere (18c) und die äußere (18d) zylindrische Wand Achsen (Y) aufweisen, die nicht miteinander ausgerichtet sind und/oder die nicht auf einer Längsachse (X) des Untersetzungsgetriebes ausgerichtet sind.

6. Untersetzungsgetriebe (10) nach einem der Ansprüche 2 bis 5, wobei die erste Mulde mit einer radial inneren ringförmigen Wand (20a) verbunden ist, die Teil der Leitung (20) ist, und die zweite Mulde mit einer radial äußeren ringförmigen Wand (20b) verbunden ist, die Teil der Leitung ist.

7. Untersetzungsgetriebe (10) nach einem der vorstehenden Ansprüche, wobei eine perforierte ringförmige Trennwand (24) in der Kammer (18) untergebracht ist und so konfiguriert ist, dass sie das ÖI entlüftet.

8. Untersetzungsgetriebe (10) nach Anspruch 7, in Abhängigkeit von Anspruch 6, wobei die Trennwand (24) einen ersten Sektor umfasst, der sich in der ersten Mulde erstreckt, im Wesentlichen im Bereich der radial inneren ringförmigen Wand (20a), und einen zweiten Sektor, der sich in der zweiten Mulde erstreckt, im Wesentlichen im Bereich der radial äußeren ringförmigen Wand (20b).

9. Flugzeugturbotriebwerk, das ein Untersetzungsgetriebe (10) nach einem der vorstehenden Ansprüche umfasst.

## Claims

1. A planetary reduction gear (10) for an aircraft turbine engine, this reduction gear comprising a rotatable sun gear, a rotatable ring gear (9), and planet gears meshed with the sun gear and ring gear and carried by a planet carrier intended to be fixed to a stator, said reduction gear further comprising an annular gutter for recovering and channelling lubrication oil that is mounted around the ring gear, said ring gear (9) comprising mounting flanges (9ab, 9bb) and oil outlet orifices (4) formed by radial lunulae (14) formed in facing faces of the mounting flanges (9ab, 9bb), said facing faces being separated by a median plane (P) passing substantially through the centre of the ring gear (9),
the reduction gear further comprising an annular deflector (22) fixed to the ring gear and configured to route the oil exiting radially towards the outside of the ring gear up to the gutter by virtue of centrifugal forces, the gutter comprising:
- an annular chamber (18) which is axially remote relative to the median plane (P), and
- an annular duct (20) located on one side of said chamber and emerging into said chamber, this annular duct being configured to receive the oil routed by said deflector and to ensure its flow to the chamber.

2. The reduction gear (10) according to claim 1, wherein the annular chamber (18) defines a first upper semi-circular trough with a U-shaped axial cross-section, which extends substantially from 9 o'clock to 12 o'clock and from 12 o'clock to 3 o'clock by analogy with a dial of a clock, and a second lower semi-circular trough with a U-shaped axial cross-section, which extends substantially from 9 o'clock to 6 o'clock and from 6 o'clock to 3 o'clock by analogy with a dial of a clock.

3. The reduction gear (10) according to claim 2, wherein said first trough comprises a bottom defined by an inner cylindrical wall (18c) of the chamber (18), and said second trough comprises a bottom defined by an outer cylindrical wall (18d) of the chamber.

4. The reduction gear (10) according to claim 3, wherein the outer cylindrical wall (18d) comprises a radial opening (26) for discharging oil.

5. The reduction gear (10) according to claim 3 or 4, wherein the inner (18c) and outer (18d) cylindrical walls have axes (Y) which are not aligned with each other and/or are not aligned with a longitudinal axis (X) of the reduction gear.

6. The reduction gear (10) according to one of claims 2 to 5, wherein the first trough is connected to a radially inner annular wall (20a) forming part of said duct (20), and the second trough is connected to a radially outer annular wall (20b) forming part of said duct.

7. The reduction gear (10) according to one of the preceding claims, wherein a perforated annular partition (24) is housed in said chamber (18) and is configured to deaerate the oil.

8. The reduction gear (10) according to claim 7, in dependence of claim 6, wherein the partition (24) comprises a first sector extending into the first trough, substantially at said radially inner annular wall (20a), and a second sector extending into the second trough, substantially at said radially outer annular wall (20b).

9. An aircraft turbine engine, comprising a reduction gear (10) according to one of the preceding claims.
